(19) Europäisches Patentamt
European Patent Office
Office européen des brevets

(11) **EP 4 672 161 A1**

(12) **EUROPEAN PATENT APPLICATION**

(43) Date of publication:
**31.12.2025 Bulletin 2026/01**

(21) Application number: **24185031.2**

(22) Date of filing: **27.06.2024**

(51) International Patent Classification (IPC):
***G06T 19/00*** (2011.01)

(52) Cooperative Patent Classification (CPC):
**G06T 19/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **TOYOTA JIDOSHA KABUSHIKI KAISHA**
**Aichi-ken, 471-8571 (JP)**

(72) Inventors:
• **GARATTONI, Lorenzo**
**1140 BRUSSELS (BE)**
• **DAVOLI, Davide**
**1140 BRUSSELS (BE)**
• **CASSINELLI, Matteo**
**1140 BRUSSELS (BE)**
• **SUNDRAM, Jugesh**
**1140 BRUSSELS (BE)**
• **PITTINO, Federico**
**1140 BRUSSELS (BE)**

(74) Representative: **Cabinet Beau de Loménie**
**103, rue de Grenelle**
**75340 Paris Cedex 07 (FR)**

Remarks:
Amended claims in accordance with Rule 137(2) EPC.

(54) **METHODS FOR GENERATING A 3D COMPOSITE SCENE, FOR RENDERING AN IMAGE OF SAID COMPOSITE SCENE, CORRESPONDING APPARATUSES AND COMPUTER PROGRAMS**

(57) The present disclosure relates to a method for generating a three-dimensional (3D) composite scene by inserting at least a first object within a scene, the method comprising:
- determining at least one position within said scene where said first object is to be inserted based on of a number of 3D points comprised in an intersection of:

• a surface of an envelope comprising a 3D representation of said first object, and of
• a surface of an envelope comprising a 3D representation of said at least a second object of said scene;

inserting said first object at said at least one determined position.

FIG. 3

**Description**

BACKGROUND OF THE INVENTION

1. Field of the invention

The present disclosure relates to 3D (three-dimension) computer vision and more particularly to a solution for generating realistic composite scene comprising objects associated with high-quality annotations.

2. Description of Related Art

3D (three-dimension) computer vision enables machines to understand and interact with the 3D world that surrounds themand include depth estimation, scene reconstruction, point cloud segmentation, and 6D pose estimation.
One of the main challenges in 3D computer vision is producing high-quality annotations for 3D data. Unlike annotations of 2D (two-dimension) data, annotating 3D data involves not only marking the location and shape of objects in images, but also labelling the depth and orientation information pertaining to these objects accurately. Manually annotating such data is time-consuming for large-scale datasets. Scene diversity (i.e., lighting conditions, camera models, environments, etc.) and occlusions can further complicate the task of producing high-quality annotations for 3D data manually.
Additional challenges are the variety of backgrounds in which a plurality of objects can be inserted, the complex interaction and the occlusions that might occur between these objects. The task, however, is particularly interesting because of its large number of potential applications, such as virtual and augmented reality, human-robot interaction, surveillance, etc.
With computer-vision models continuously growing in scale, methods that enable large datasets collection with high-quality annotations are becoming crucial. This holds especially true for 3D annotations, which are extremely difficult to produce manually due to the possible scale ambiguities and extreme accuracy required. A solution to this problem is the generation of synthetic data, which can be achieved through realistic simulators or scene-compositing techniques. One of the main challenges of working with synthetic generation methods is producing data that is sufficiently realistic and thus bridging the reality gap between the synthetic and real domains.
Therefore, there is scope for improvement.

SUMMARY

The object of the present invention is to at least substantially remedy the above-mentioned drawbacks.
In this respect, the present disclosure relates to a method for generating a realistic three-dimensional (3D) composite scene by inserting at least a first object within a scene, the method comprising:

- determining at least one position within said scene where said first object is to be inserted based on of a number of 3D points comprised in an intersection of:

  • a surface of an envelope comprising a 3D representation of said first object, and of

  • a surface of an envelope comprising a 3D representation of said at least a second object of said scene;

- inserting said first object at said at least one determined position.

Such a method enables the generating of realistic composite scenes which can then be used to render realistic images. In this method, the objects are inserted within the scene so as not overlap other objects and/or the environment thus offering a realistic composite scene.
Indeed, the present solution ensures that a first object, such as an avatar of a human being, does not overlap with a second object such as another avatar or an element already in the scene thus avoiding scenes where, for example, half the body of the avatar is inserted within a wall or through the ground.
This method is particularly advantageous for inserting 3D models of human beings together with their annotations, such as the pose, the body shape, etc., within a scene.
In particular implementations, when a plurality of positions is determined for said first object, the method comprises randomly selecting one position among said plurality of positions where said first object is to be inserted.
Such a randomization contributes to the richness of the data generated. As a consequence, this randomization improves performance of models trained on this data.
In particular implementations, determining said at least one position within said scene where said first object is to be inserted comprises:

- determining at least one plane in the 3D representation of said scene;

- comparing, for a plurality of positions of said envelope comprising the 3D representation of said first object across said plane, the number of 3D points of the 3D representation of said second object of said scene comprised on the surface of said envelope with a threshold; and

- when said number is lower than or equal to said threshold, identifying said position as a position where said first object is to be inserted.

In particular implementations, said envelope is moved incrementally across said plane in a given direction, a move of said envelope triggering the comparison of the number of 3D points of the 3D representation of said second object of said scene comprised on the surface of said envelope with said threshold.

In particular implementations, said plane is divided according to a grid, a cell of said grid corresponding to a position of said envelope across said plane.

In particular implementations, a scaling factor is applied to said envelope prior to the comparing of the number of 3D points of the 3D representation of said second object of said scene comprised on the surface of said envelope with said threshold.

Re-sizing the envelope contributes to the realism of the composite scene.

In particular implementations, said at least one object to be inserted within said scene is a 3D model of a human being and the corresponding 3D human pose annotations.

Realistically inserting models of human beings within a scene is challenging. The present solution enables the generation of datasets representing 3D human pose estimation which represents a large variety of conditions such as backgrounds, lighting conditions, occlusions while remaining realistic. The composite scenes obtained using the method according to the invention can be used to improve the training of models such as "CLIFF: Carrying Location Information in Full Frames into Human Pose and Shape Estimation", "PARE: Part Attention Regressor for 3D Human Body Estimation", or "SPIN: Learning to Reconstruct 3D Human Pose and Shape via Model-fitting in the Loop".

According to a second aspect, the present invention concerns a method for rendering at least one image of a composite scene generated by inserting at least one object within a scene according to the method of the invention, said rendering method comprising: said rendering method comprises:

- projecting a 3D representation of said at least one object and a 3D representation of said scene on an image plane of a virtual camera;

- generating said at least one image to be rendered by combining data pertaining to said scene and to said at least one object; and

- rendering said at least one image.

In particular implementations, generating said at least one image to be rendered further comprises:

- identifying at least one object of said composite scene for which at least one 3D point of a 3D representation of said object intercepts at least one of the rays going from a point of said image plane to a point of origin of a coordinate system of said virtual camera;

- identifying 3D points of the 3D representation of said scene intercepting at least one of said rays; and

- replacing said identified 3D points of the 3D representation of said scene by the 3D points of the 3D representation of said identified object.

According to a third aspect, the present invention concerns an apparatus for generating a three-dimensional (3D) composite scene by inserting at least a first object within a scene, the apparatus comprising at least one processor configured for:

- determining at least one position within said scene where said first object is to be inserted based on of a number of 3D points comprised in an intersection of:

- a surface of an envelope comprising a 3D representation of said first object, and of

- a surface of an envelope comprising a 3D representation of at least a second object of said scene;

- inserting said first object at said at least one determined position.

According to a fourth aspect, the present invention concerns an apparatus for rendering at least one image of a composite scene generated by inserting at least one object within a scene according to the method of claims 1 to 7, the apparatus comprising at least one processor configured for:

- projecting a 3D representation of said at least one object and a 3D representation of said scene on an image plane of a virtual camera;

- generating said at least one image to be rendered by combining data pertaining to said scene and to said at least one object; and

- rendering said at least one image.

Embodiments of the present invention also extend to programs which, when run on a computer or processor, cause the computer or processor to carry out the method described above or which, when loaded into a programmable device, cause that device to become the device described above. The program may be provided by itself or carried by a carrier medium. The carrier medium may be a storage or recording medium, or it may be a transmission medium such as a signal. A program embodying the present invention may be transitory or non-transitory.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

- FIG. 1 represents illustrates an example of the hardware architecture of a system in which the present solution can be implemented;

- FIG.2 represents a flowchart of a method for generating a three-dimensional composite scene according to a particular implementation of the invention;

- FIG.3 represents two composite scenes obtained from the method for generating a three-dimensional composite scene according to a particular implementation of the invention;

- FIG. 4 represents a flowchart of a method for rendering at least one image of a composite scene generated by inserting at least one object within a scene according to the invention according to a particular implementation.

DETAILED DESCRIPTION OF EMBODIMENTS

The present invention concerns a method for generating a three-dimensional (3D) composite scene and a method for rendering at least one image of a composite scene generated according to the method of the invention.

Such a composite scene is obtained by inserting objects in an environment in a realistic way. In the following disclosure, the term "object" refers to both animated objects, such as human beings or animals, and inanimate objects, such as buildings, furniture, vegetation, etc.

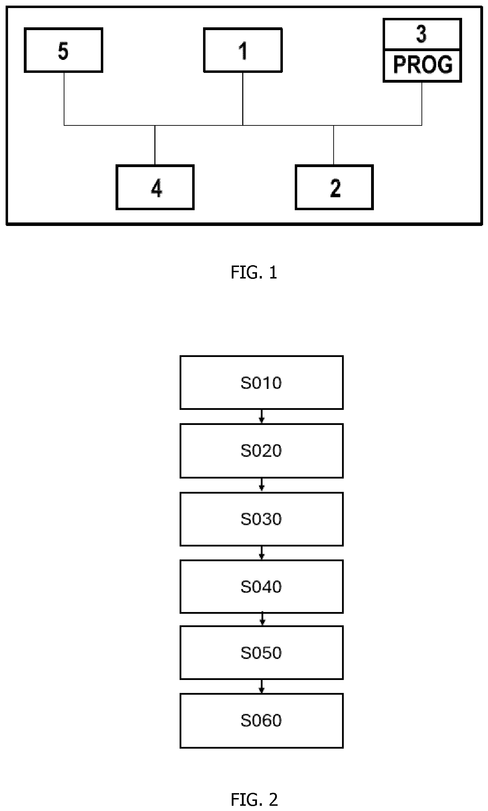

**Figure 1** represents illustrates an example of the hardware architecture of a system in which the present solution can be implemented.

To this end, the system 1000 has the hardware architecture of a computer. As shown in Figure 1, the system comprises a processor 1. Although illustrated as a single processor 1, two or more processors can be used according to particular needs, desires, or particular implementations of the system. Generally, the processor 1 executes instructions and manipulates data to perform the operations of the system and any algorithms, methods, functions, processes, flows, and procedures as described in the present disclosure.

The system also comprises communication means 5 which are used by the system for communicating with another electronic device that is communicatively linked to that system 1000, for example for connecting a database. Generally, the communication means 5 are operable to communicate with a radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated system.

Although illustrated as a single communication means 5 in Figure 1, two or more communication means can be used according to particular needs, desires, or particular implementations of the system. The system also comprises a random-access memory 2, a read-only memory 3, and a non-volatile memory 4.

The non-volatile memory 4 of the system also constitutes a recording medium conforming to the invention, which is readable by processor 1 and on which is recorded a computer program PROG conforming to the invention, containing instructions for carrying out the steps of the method for generating a composite scene and the method for method for rendering at least one image of a composite scene according to the invention. The program PROG defines functional modules of the system, which are based on or control the aforementioned elements 1 to 5 of the system.

The different functional modules described above can be part of a single electronic device or can be distributed in a plurality of electronic devices belonging to that system 1000.

**Figure 2** is a flowchart of a method for generating a three-dimensional composite scene according to a particular implementation of the invention. The method for generating a 3D composite scene will be disclosed with objects being 3D representations of human beings. These objects are associated with annotations describing their pose, orientation, movement, etc. Of course, the present method can be implemented with objects other than a 3D representation of a human beings.

Since 3D human pose estimation is particularly challenging in terms of data generation and annotation due to the complex nature of human anatomy and motion dynamics, in a particular implementation of the solution, a dataset of annotated 3D object is obtained using Gaussian primitives.

These Gaussian primitives are deformed by tetrahedral cages to represent animatable avatars representing human beings, with deformations driven by joint angles and key-points. An example of a method for reconstructing photo-realistic and animatable avatar is called Gaussian Avatar [1].

Obtaining a dataset for human pose estimation, consists for example, in building, using Gaussian Splatting, a 3D representation of a scene from a set of images of a static scene and their respective camera pose, utilizing a set of anisotropic 3D Gaussians.

A set of Gaussians is defined and shared across all the images of a set images. Each Gaussian of this set of Gaussians is defined by its position $\mu$, covariance matrix $\Sigma$, opacity $\sigma$ and color c. To capture direction dependent appearance, the colour is encoded via spherical harmonics. The $\mu$ centered Gaussian with covariance $\Sigma$ is defined as:

$$G(x) = e^{-\frac{1}{2}(x-\mu)^T \Sigma^{-1}(x-\mu)} \quad (1)$$

These parameters are then optimized by rendering the splats from a ground-truth camera pose and comparing the rendered image with the corresponding ground-truth one. To ensure the positive semi-definiteness of the covariance matrix during gradient descent optimization, each Gaussian is modelled as an ellipsoid defined by a scaling matrix S and a rotation matrix $R$ :

$$\Sigma = RSS^T R^T \quad (2)$$

The color C of each pixel of a given image of the set of images is computed by $\alpha$-blending all the N projected Gaussians overlapping the pixel:

$$C = \sum_{i=1}^{N} c_i \alpha_i \prod_{j=1}^{i-1} \left(1 - \alpha_j\right) \quad (3)$$

where $c_i$ is the color represented by spherical harmonics coefficients and $\alpha_i$ is the blending weight given by evaluating equation. (1) multiplied by the learnable per Gaussian opacity factor $\sigma_i$.

To reconstruct a dynamic 3D representation of a human being, or subject, firstly a parametric body model, such as SMPL-X [2], is fit for every time step of the recordings of images of this human being. The tracked body model mesh is then used to drive a dynamic Gaussian Splatting representation of the subject. Then, each 3D Gaussian is rigged to a triangular face of the mesh.

Then, for each time-step of the video, a body model is fitted onto the subject by minimizing a key-point loss between the projected body model joints and the ground-truth 2D joints. Finally, the subject is segmented from the background of the image.

A parametric morphable model is used to control the animation of the 3D reconstructed subject. Given the body model mesh, a 3D Gaussian is rigged to each triangular face of the mesh.

In the meantime, a local coordinate system with origin T and orientation $Q$ for every triangle is defined. More specifically, T is the centroid of the triangle while $Q$ is established using one edge, the surface normal, and a third direction orthogonal to both. Additionally, a scaling factor $k \in \mathbb{R}$ is computed.

The Gaussians are defined statically within the local coordinate space of the triangle, yet exhibit dynamic behaviour in the global space, reflecting the deformations of their parent triangle across different time-steps. Their position $\mu$, rotation $R$ and scaling S are defined locally, but can be easily mapped to the global space applying:

$$R_g = QR(4)$$

$$\mu_g = kQ\mu + T(5)$$

$$S_g = kS(6)$$

where $R_g$, $\mu_g$, $S_g$ are respectively the rotation, position and scaling of the Gaussian in global space. Finally, the 3D Gaussians in the global space are rendered into images, capturing therefore the dynamics of the subject.

Because the body model meshes exclusively unclothed humans and in order to accurately capture these differences, static per-vertex offsets $\mathcal{O} \in \mathbb{R}^{|V| \times 3}$ are optimized. Additionally, dynamic offsets $\mathcal{K} \in \mathbb{R}^{N \times |V| \times 3}$ are optimized as well in order to represent the dynamic deformations of both body and clothing.

The final mesh vertices $\overline{V}_i$ at timestep i are then defined as:

$$\overline{V}_i = V_i + \mathcal{O} + \mathcal{K}_i(7)$$

Moreover, the tracked body model parameters are fine-tuned (such as body pose, shape, rotation, translation) to fix misalignment of the tracker.

The optimization process is done by comparing the rendered images with the segmented ground-truth ones. Then an RGB loss is applied, which combines a $\mathcal{L}_1$ term with a D-SSIM, or structural similarity index, one:

$$L_{rgb} = (1 - \lambda)\mathcal{L}_1 + \lambda\mathcal{L}_{D-SSIM}(8)$$

Then, a position loss, denoted as $\mathcal{L}_{\text{pos}}$, is computed to penalize deviations of positions from their parent (i.e. the triangle of the mesh to which the Gaussian is linked) centre, with tolerance $\tau_{\text{pos}}$. Additionally, their scale loss, $\mathcal{L}_{\text{scale}}$ is revisited, by enforcing both a local threshold relative to the parent's scale and a global threshold to penalize Gaussians that are excessively large in global coordinates.

$$\mathcal{L}_{\text{pos}} = \left\| \max(\mu, \tau_{\text{pos}}) \right\|_2 (9)$$

$$\mathcal{L}_{\text{scale}} = \left\| \max\left( \overline{V}[k]S, \min\left( \overline{V}[k]\tau_{\text{scale}}^l, \tau_{\text{scale}}^g \right) \right) \right\| (10)$$

Where $\tau_{pos} = 1$, $\tau^l_{scale} = 1$, $\tau^g_{scale} = 6 \cdot 10^{-3}$. In addition, two Laplacian loss terms are applied to encourage smoothness for the static and dynamic offsets. Given the Laplacian operator of the mesh vertices L, we define:

$$\mathcal{L}_{static} = \| L\mathcal{O} \|_2 \quad (11)$$

$$\mathcal{L}_{dyn} = \frac{1}{N}\sum_{i=1}^{N} \|L\mathcal{K}_i\|\, (12)$$

These loss terms penalize deviations of a vertex offset from its neighbouring ones, promoting smoothness while preserving local details.

The final loss term is defined as:

$$\mathcal{L} = \mathcal{L}_{rgb} + \lambda_{pos}\,\mathcal{L}_{pos} + \lambda_{scale}\,\mathcal{L}_{scale} + \lambda_{static}\,\mathcal{L}_{static} + \lambda_{dyn}\,\mathcal{L}_{dyn} \quad (13)$$

At this stage, a dataset for human pose estimation together with the corresponding annotations is obtained.

In a step S010, the system 1000 obtains a first sdataset DH for human pose estimation together with the corresponding annotations. Such a dataset DH can be generated according to the method described above or by any other method capable of providing human pose estimation together with the corresponding annotations.

The system 1000 also obtains (steps S020) a second dataset DE comprising a plurality of environments such as a room, a countryside landscape, a city landscape, etc. Such a dataset DE may comprise images acquired, for example, from cameras embedded in smartphones. These images are then processed to estimate the camera poses and initial point cloud. Once reconstructed with 3D Gaussian Splatting, a 3D scene representing this environment can be rendered from arbitrary viewpoints.

Steps S010 and S020 can be executed concomitantly.

In a step S030, an environment is selected in the dataset DE. Then, at least one object from the dataset DH is to be inserted within this environment.

To achieve this, a ground plane of the selected environment is extracted in a step S040 from the 3D Gaussian positions. The ground plane is determined as the plane with the largest support in the 3D Gaussian point cloud of the selected environment.

Once the ground plane is identified, a set of positions on the ground plane where objects can be placed without collisions is identified.

In a step S050, an envelope comprising all the 3D Gaussians of the object to be inserted in the environment is computed. In an implementation of the method, such an envelope can take be a bounding box. Because the object was captured in a different environment, a scaling factor is applied to the envelope in order to match the scale of the selected environment.

Once the ground plane is determined and the envelope of each of the objects to be inserted in the environment are resized, it is possible to maximize the number of positions where objects can be inserted within the environment.

In an implementation of the present solution, in a step S060, the envelopes of these objects are slid across the ground plane. The slide is performed incrementally such that two envelopes placed at two consecutive positions have an intersection over union (IoU) of, for example, 90%. The percentage of the IoU may, of course, take may other value. The bottom face of each of these envelopes, when they take the form a bounding box, lies on the ground plane. In this implementation, the ground plane may be divided according to a grid, a cell of said grid corresponding to a position of said envelope across said plane.

In another implementation of the present solution, a position for inserting an object in the environment is viable if the corresponding envelope in that position contains a number of 3D Gaussians from the environment lower than a certain threshold.

These two implementations promote robustness to some level of noise in the reconstruction of the environment. When one of these viable positions is allocated to a given object, all the other envelopes overlapping with the envelope of this object are discarded to prevent collisions between objects.

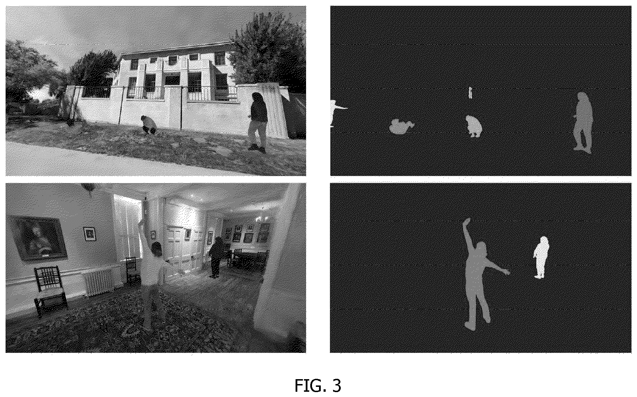

**Figure 3** represents two composite scenes obtained from the method for generating a three-dimensional composite scene according to a particular implementation of the invention. The images on the left represent the composite scene while, images on the right represent the objects together with their annotations inserted on the ground plane of the

environment.

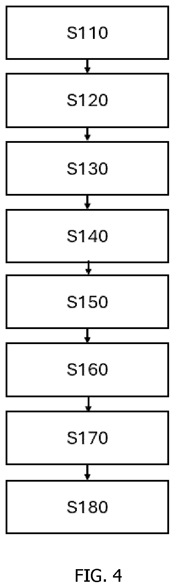

<u>Figure 4</u> is a flowchart of a method for rendering at least one image of a composite scene generated by inserting at least one object within a scene according to the invention according to a particular implementation.

Once the composite scene is generated by inserting a random number of objects in the identified positions on the ground plane, it may then be rendered from arbitrary viewpoints.

In a first step S0110, a camera pose is randomly selected along a camera path defined for the composite scene.

Once the camera pose is selected, an amination of each of the objects of the composite scene is computed (S0120). This enables the generation of images with a rich variety of poses combined with different viewpoints. The images are generated along with their corresponding annotations. The annotations provided include the annotations pertaining to each object inserted in the environment as well as the keypoints projected to the image space, the mask of each object, and the occlusion/visibility information for each key-point.

In a particular implementation, a set of rays $r = o + td$ going from camera origin through each pixel on the camera C of size H $\times$ W is generated (S0130).

Then, for each ray r, points are sampled using the environment 3D Gaussians and their corresponding volume density $\sigma_i$, emitted color $\mathbf{c}_i$ and normal $n_i$ are extracted (S0140).

Then, the collision between the ray r and the envelopes of the objects intercepting said ray are computed (S0150).

Then, for each envelope intersected by ray r, values ($t_{start}, t_{end}$) representing the points where the ray r intersects an envelope for the first and last time are extracted (S0160).

For each envelope intersected by the ray r, the sampled points representing the environment between ($t_{start}, t_{end}$) are replaced with the corresponding ones obtained using the corresponding object 3D Gaussian (S0170). This makes sure that the object is correctly integrated into the accumulation and that it will be rendered in the defined position.

The sampled points representing the object are sampled along a ray $r_a$ which represents the ray passing through ($t_{start}, t_{end}$) i.e. $r_e = t_{start} + t * t_{end}$, $t \in [0,1]$) converted in the object Gaussian space. Once the points representing the object are sampled from the ray $r_a$, the corresponding volume density $\sigma_i$ and emitted color $\mathbf{c}_i$ and normal $n_i$ is extracted in a step (S0180).

After performing those steps for each camera ray r, an accumulation is performed for obtaining the final image. Since the points representing the object and the points representing the environment are integrated properly along the different rays, a realistic image of the composite scene is obtained.

In an implementation of the present solution, the dataset DH is obtained using PARE [3], a state-of-the-art method for 3D multi- person pose estimation, and more particularly the models and their respective configurations as given in the HuMMan [4] library along with the default hyperparameters.

To validate the effectiveness of the present method, referred hereafter as Splat4Real-Humans in fine-tuning methods for the task of in-the-wild 3D multi-person pose estimation from a monocular RGB image, PARE is first trained on AGORA [5] and the performance is tested on 3DPW [6].

Then, PARE pre-trained on AGORA is fine-tuned on Splat4Real- Humans and the performance is tested on 3DPW.

This process is repeated on a Human 3.6M [7] dataset, i.e. PARE is first trained on a Human3.6M dataset, and then fine-tuned with Splat4Real-Humans. Finally, PARE is trained on the Human 3.6M dataset and fine-tuned using the AGORA dataset and the performance is tested on 3DPW.

The metrics of Mean Per Joint Position Error (MPJPE) [8] and Procrustes Analysis MPJPE (PA-MPJPE) [9] are used to report the outcome of these experiments.

The performance of all the models on the 3DPW dataset are reported in Table 1 below the best result is highlighted in bold.

Table 1:

| Training dataset | Pretrained on | Data types | PA-MPJPE ($\downarrow$) | MPJPE ($\downarrow$) |
|---|---|---|---|---|
| Human 3.6M | - | real | 82 | 126 |
| AGORA | - | synth | 81 | 129 |
| AGORA | Human 3.6M | real+synth | 87 | 137 |
| Splat4Real-Humans | AGORA | synth | 76 | 113 |
| Splat4Real-Humans | Human 3.6M | real + synth | **66** | **105** |

The performance of PARE when trained only on either AGORA or Human 3.6M is very similar for both the datasets. This is despite one dataset being a synthetic dataset and the other being a real dataset. When using AGORA for fine-tuning a model trained on Human 3.6M, the metric scores do not improve.

Whereas, when fine-tuning a model trained on Splat4Real-Humans, one notes a significant improvement in the metric scores of models pretrained on either AGORA or Human 3.6M. Keeping in mind that the 3DPW is a real in-the-wild dataset, these results demonstrate the contribution of the method according to the invention to bridge the gap between synthetic datasets and real datasets.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

Bibliography:

[1]: Kerbl, B., Kopanas, G., Leimkühler, T., Drettakis, G.: 3d gaussian splatting for real-time radiance field rendering. ACM TOG 42(4) (2023)

[2]: Pavlakos, G., Choutas, V., Ghorbani, N., Bolkart, T., Osman, A.A.A., Tzionas, D., Black, M.J.: Expressive body capture: 3d hands, face, and body from a single image. In: Proceedings IEEE Conf. on Computer Vision and Pattern Recognition (CVPR) (2019)

[3]: Kocabas, M., Huang, C.H.P., Hilliges, O., Black, M.J.: Pare: Part attention regressor for 3d human body estimation. In: Proceedings of the IEEE/CVF International Conference on Computer Vision. pp. 11127-11137 (2021)

[4]: Cai, Z., Ren, D., Zeng, A., Lin, Z., Yu, T., Wang, W., Fan, X., Gao, Y., Yu, Y., Pan, L., Hong, F., Zhang, M., Loy, C.C., Yang, L., Liu, Z.: HuMMan: Multi-modal 4d human dataset for versatile sensing and modeling. In: ECCV. pp. 557-577 (2022)

[5]: Patel, P., Huang, C.H.P., Tesch, J., Hoffmann, D.T., Tripathi, S., Black, M.J.: AGORA: Avatars in geography optimized for regression analysis. In: CVPR (2021)

[6]: von Marcard, T., Henschel, R., Black, M., Rosenhahn, B., Pons-Moll, G.: Recovering accurate 3d human pose in the wild using imus and a moving camera. In: ECCV (2018)

[7]: Ionescu, C., Papava, D., Olaru, V., Sminchisescu, C.: Human3.6m: Large scale datasets and predictive methods for 3d human sensing in natural environments. IEEE TPAMI 36(7), 1325-1339 (2014)

[8]: Ionescu, C., Papava, D., Olaru, V., Sminchisescu, C.: Human3.6m: Large scale datasets and predictive methods for 3d human sensing in natural environments. IEEE TPAMI 36(7), 1325-1339 (2014)

[9]: Loper, M., Mahmood, N., Romero, J., Pons-Moll, G., Black, M.J.: SMPL: A Skinned multi-person linear model. ACM TOG 34(6), 248:1-248:16 (2015)

**Claims**

1. A method for generating a three-dimensional (3D) realistic composite scene by inserting at least a first object within a scene, the method comprising:

   - determining at least one position within said scene where said first object is to be inserted based on of a number of 3D points comprised in an intersection of:

     • a surface of an envelope comprising a 3D representation of said first object, and of
     • a surface of an envelope comprising a 3D representation of said at least a second object of said scene;

   - inserting said first object at said at least one determined position.

2. The method according to claim 1 further comprising, when a plurality of positions is determined for said first object, randomly selecting one position among said plurality of positions where said first object is to be inserted.

3. The method according to claim 1 or claim 2 wherein determining said at least one position within said scene where said first object is to be inserted comprises:

- determining at least one plane in the 3D representation of said scene;
- comparing, for a plurality of positions of said envelope comprising the 3D representation of said first object across said plane, the number of 3D points of the 3D representation of said second object of said scene comprised on the surface of said envelope with a threshold; and
- when said number is lower than or equal to said threshold, identifying said position as a position where said first object is to be inserted.

4. The method according to claim 3 wherein said envelope is moved incrementally across said plane in a given direction, a move of said envelope triggering the comparison of the number of 3D points of the 3D representation of said second object of said scene comprised on the surface of said envelope with said threshold.

5. The method according to claim 3 wherein said plane is divided according to a grid, a cell of said grid corresponding to a position of said envelope across said plane.

6. The method according to any of claims 3 to 5 wherein a scaling factor is applied to said envelope prior to the comparing of the number of 3D points of the 3D representation of said second object of said scene comprised on the surface of said envelope with said threshold.

7. The method according to any of claims 1 to 6 wherein said at least one object to be inserted within said scene is a 3D image of a human being and the corresponding 3D human pose annotations.

8. A method for rendering at least one image of a composite scene generated by inserting at least one object within a scene according to the method of claims 1 to 7, said rendering method comprising:

- projecting a 3D representation of said at least one object and a 3D representation of said scene on an image plane of a virtual camera;
- generating said at least one image to be rendered by combining data pertaining to said scene and to said at least one object; and
- rendering said at least one image.

9. The method according to claim 8 wherein generating said at least one image to be rendered further comprises:

- identifying at least one object of said composite scene for which at least one 3D point of a 3D representation of said object intercepts at least one of the rays going from a point of said image plane to a point of origin of a coordinate system of said virtual camera;
- identifying 3D points of the 3D representation of said scene intercepting at least one of said rays; and
- replacing said identified 3D points of the 3D representation of said scene by the 3D points of the 3D representation of said identified object.

10. An apparatus for generating a three-dimensional (3D) realistic composite scene by inserting at least a first object within a scene, the apparatus comprising at least one processor configured for:

- determining at least one position within said scene where said first object is to be inserted based on of a number of 3D points comprised in an intersection of:

• a surface of an envelope comprising a 3D representation of said first object, and of
• a surface of an envelope comprising a 3D representation of at least a second object of said scene;

- inserting said first object at said at least one determined position.

11. An apparatus for rendering at least one image of a realistic composite scene generated by inserting at least one object within a scene according to the method of claims 1 to 7, the apparatus comprising at least one processor configured for:

- projecting a 3D representation of said at least one object and a 3D representation of said scene on an image plane of a virtual camera;
- generating said at least one image to be rendered by combining data pertaining to said scene and to said at least one object; and
- rendering said at least one image.

12. A computer program set including instructions for executing the steps of the method of any one of claims 1 to 7 when said program set is executed by at least one computer.

13. A recording medium readable by at least one computer and having recorded thereon at least one computer program including instructions for executing the steps of the method of any one of claims 1 to 7.

14. A computer program set including instructions for executing the steps of the method of any one of claims 8 to 9 when said program set is executed by at least one computer.

15. A recording medium readable by at least one computer and having recorded thereon at least one computer program including instructions for executing the steps of the method of any one of claims 8 to 9.

**Amended claims in accordance with Rule 137(2) EPC.**

1. A method for generating a three-dimensional (3D) realistic composite scene by inserting at least a first object within a scene, said composite scene being intended to be used for training human position estimation models, wherein said at least a first object is a 3D image of a human being and the corresponding 3D human pose annotations, **characterized in that** it comprises:

   - determining at least one position within said scene where said first object is to be inserted by:

     • determining (S040) at least one plane in the 3D representation of said scene;
     • moving (S060) an envelope comprising a 3D representation of said first object incrementally across said plane in a given direction such that an Intersection over Union (IoU) between its current and previous positions is of 90%,
     • after each move of said envelope across said plane, comparing (S060) the number of 3D points of a 3D representation of a second object of said scene comprised on the surface of said envelope with a threshold; and
     • when said number is lower than or equal to said threshold, identifying (S060) said position as a position where said first object is to be inserted;

   - inserting said first object at said at least one determined position.

2. The method according to claim 1 further comprising, when a plurality of positions is determined for said first object, randomly selecting one position among said plurality of positions where said first object is to be inserted.

3. The method according to claim 1 or claim 2 wherein said plane is divided according to a grid, a cell of said grid corresponding to a position of said envelope across said plane.

4. The method according to any of claims 1 to 3 wherein a scaling factor is applied (S050) to said envelope prior to the comparing of the number of 3D points of the 3D representation of said second object of said scene comprised on the surface of said envelope with said threshold.

5. A method for rendering at least one image of a composite scene generated by inserting at least one object within a scene according to the method of claims 1 to 4, said image being intended to be used for training human position estimation models, **characterized in that** it comprises:

   - projecting a 3D representation of said at least one object and a 3D representation of said scene on an image plane of a virtual camera;
   - generating (S120) said at least one image to be rendered by combining data pertaining to said scene and to said at least one object; and
   - rendering said at least one image.

6. The method according to claim 5 wherein generating said at least one image to be rendered further comprises:

- identifying at least one object of said composite scene for which at least one 3D point of a 3D representation of said object intercepts at least one of the rays going from a point of said image plane to a point of origin of a coordinate system of said virtual camera;
- identifying 3D points of the 3D representation of said scene intercepting at least one of said rays; and
- replacing said identified 3D points of the 3D representation of said scene by the 3D points of the 3D representation of said identified object.

7. An apparatus for generating a three-dimensional (3D) realistic composite scene by inserting at least a first object within a scene, said composite scene being intended to be used for training human position estimation models, wherein said at least a first object is a 3D image of a human being and the corresponding 3D human pose annotations, the apparatus comprising at least one processor configured for:

- determining at least one position within said scene where said first object is to be inserted by:

• determining (S040) at least one plane in the 3D representation of said scene;
• moving (S060) an envelope comprising a 3D representation of said first object incrementally across said plane in a given direction such that an Intersection over Union (IoU) between its current and previous positions is of 90%,
• after each move of said envelope across said plane, comparing (S060) the number of 3D points of a 3D representation of a second object of said scene comprised on the surface of said envelope with a threshold; and
• when said number is lower than or equal to said threshold, identifying (S060) said position as a position where said first object is to be inserted;

- inserting said first object at said at least one determined position.

8. An apparatus for rendering at least one image of a realistic composite scene generated by inserting at least one object within a scene according to the method of claims 1 to 4, said image being intended to be used for training human position estimation models, the apparatus comprising at least one processor configured for:

- projecting a 3D representation of said at least one object and a 3D representation of said scene on an image plane of a virtual camera;
- generating said at least one image to be rendered by combining data pertaining to said scene and to said at least one object; and
- rendering said at least one image.

9. A computer program set including instructions for executing the steps of the method of any one of claims 1 to 4 when said program set is executed by at least one computer.

10. A recording medium readable by at least one computer and having recorded thereon at least one computer program including instructions for executing the steps of the method of any one of claims 1 to 4.

11. A computer program set including instructions for executing the steps of the method of any one of claims 5 to 6 when said program set is executed by at least one computer.

12. A recording medium readable by at least one computer and having recorded thereon at least one computer program including instructions for executing the steps of the method of any one of claims 5 to 6.

FIG. 1

FIG. 2

FIG. 3

```
┌─────────────────┐
│     S110        │
└─────────────────┘
         │
         ▼
┌─────────────────┐
│     S120        │
└─────────────────┘
         │
         ▼
┌─────────────────┐
│     S130        │
└─────────────────┘
         │
         ▼
┌─────────────────┐
│     S140        │
└─────────────────┘
         │
         ▼
┌─────────────────┐
│     S150        │
└─────────────────┘
         │
         ▼
┌─────────────────┐
│     S160        │
└─────────────────┘
         │
         ▼
┌─────────────────┐
│     S170        │
└─────────────────┘
         │
         ▼
┌─────────────────┐
│     S180        │
└─────────────────┘
```

FIG. 4

Europäisches
Patentamt
European
Patent Office
Office européen
des brevets

**EUROPEAN SEARCH REPORT**

**Application Number**

EP 24 18 5031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EDUARD GABRIEL BAZAVAN ET AL: "HSPACE: Synthetic Parametric Humans Animated in Complex Environments", ARXIV.ORG, CORNELL UNIVERSITY LIBRARY, 201 OLIN LIBRARY CORNELL UNIVERSITY ITHACA, NY 14853, 6 January 2022 (2022-01-06), XP091130885, * abstract; figures 1,3, 6, 7 * * page 2, column 2, paragraph 4 - page 5, column 1 * ----- | 1-15 | INV. G06T19/00 |
| X | MOHAMMAD KESHAVARZI ET AL: "Contextual Scene Augmentation and Synthesis via GSACNet", ARXIV.ORG, CORNELL UNIVERSITY LIBRARY, 201 OLIN LIBRARY CORNELL UNIVERSITY ITHACA, NY 14853, 29 March 2021 (2021-03-29), XP081918568, * abstract; figures 1,2 * * page 2, column 2 - page 3, column 1 * ----- | 1,10,12, 13 | |
| | | | **TECHNICAL FIELDS SEARCHED (IPC)** G06T |

The present search report has been drawn up for all claims

| Place of search | Date of completion of the search | Examiner |
|---|---|---|
| The Hague | 27 November 2024 | Martos Riaño, Demian |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
........................................................................................
& : member of the same patent family, corresponding
     document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KERBL, B.** ; **KOPANAS, G.** ; **LEIMKÜHLER, T.** ; **DRETTAKIS, G.** 3d gaussian splatting for real-time radiance field rendering. *ACM TOG*, 2023, vol. 42 (4)
- **PAVLAKOS, G.** ; **CHOUTAS, V.** ; **GHORBANI, N.** ; **BOLKART, T.** ; **OSMAN, A.A.A.** ; **TZIONAS, D.** ; **BLACK, M.J.** Expressive body capture: 3d hands, face, and body from a single image. *Proceedings IEEE Conf. on Computer Vision and Pattern Recognition (CVPR)*, 2019
- **KOCABAS, M.** ; **HUANG, C.H.P.** ; **HILLIGES, O.** ; **BLACK, M.J.** Pare: Part attention regressor for 3d human body estimation. *Proceedings of the IEEE/CVF International Conference on Computer Vision*, 2021, 11127-11137
- **CAI, Z.** ; **REN, D.** ; **ZENG, A.** ; **LIN, Z.** ; **YU, T.** ; **WANG,W.** ; **FAN, X.** ; **GAO, Y.** ; **YU, Y.** ; **PAN, L.** HuMMan: Multi-modal 4d human dataset for versatile sensing and modeling. *ECCV*, 2022, 557-577
- **PATEL, P.** ; **HUANG, C.H.P.** ; **TESCH, J.** ; **HOFFMANN, D.T.** ; **TRIPATHI, S** ; **BLACK, M.J.** AGORA: Avatars in geography optimized for regression analysis. *CVPR*, 2021
- **VON MARCARD, T.** ; **HENSCHEL, R.** ; **BLACK, M.** ; **ROSENHAHN, B.** ; **PONS-MOLL, G.** Recovering accurate 3d human pose in the wild using imus and a moving camera. *ECCV*, 2018
- **IONESCU, C.** ; **PAPAVA, D.** ; **OLARU, V.** ; **SMINCH-ISESCU, C.** Human3.6m: Large scale datasets and predictive methods for 3d human sensing in natural environments. *IEEE TPAMI*, 2014, vol. 36 (7), 1325-1339
- **LOPER, M.** ; **MAHMOOD, N.** ; **ROMERO, J.** ; **PONS-MOLL, G.** ; **BLACK, M.J.** SMPL: A Skinned multi-person linear model. *ACM TOG*, 2015, vol. 34 (6), 248-1, 248-16